# EUROPEAN PATENT APPLICATION

(11) **EP 4 681 916 A1**
(43) Date of publication of application: **21.01.2026**
(21) Application number: 24767264.5
(22) Date of filing: 08.03.2024
(51) Int. Cl.: B32B 15/08, C08G 77/14, C09D 183/04

(54) **METAL PLATE HAVING INSULATING FILM**

(30) Priority: 09.03.2023 JP 2023036476
(71) Applicant: NIPPON STEEL CHEMICAL & MATERIAL CO., LTD., Tokyo 103-0027 (JP)
(72) Inventor: YAMADA, Noriko, Tokyo 100-8071 (JP)
(74) Representative: Vossius & Partner Patentanwälte Rechtsanwälte mbB
(86) International application number: PCT/JP2024/009187
(87) International publication number: WO 2024/185899

(57) **Abstract**

The present invention has as its technical issue designing an insulating film on a metal sheet which has a 600°C to 750°C heat resistance and is inhibited from formation of cracks even when the film thickness is 0.5 µm or more and has as its object the provision of a metal sheet having such an insulating film. If a metal sheet has an insulating film with a ratio of methyl groups with respect to the entire Si in the insulating film of 30 to 70 mol%, with a ratio of nonmethyl end groups (S-OH bonds and S-OR bonds) in the bond arms of nonmethyl group bonds of 8.0 to 11.0%, and with a ratio of alkoxy group bonds in the end groups of a methylsiloxane polymer of 1.0 to 4.0%, cracks will not form even after product annealing at 600°C to 750°C.

## Description

### FIELD

The present art relates to metal sheet having an insulating film.

### BACKGROUND

Metal sheet is often utilized as a substrate for an electronic device. For example, a solar cell, organic electro-luminescence device, all solid-state thin-film cell, etc. may be mentioned. If applying a metal sheet as the substrate for these devices, it is necessary to form an insulating film on its surface.

An insulating film on a metal sheet is for example disclosed in PTLs 1 to 3. PTL 1 proposes an insulating film comprised of a plurality of superposed inorganic polymer films mainly having siloxane bonds wherein at least one film among them is an inorganic polymer film where part of the Si is chemically bonded with organic groups or hydrogen and wherein the film of the topmost layer is an inorganic polymer film different in composition from the other films and where part of the Si is bonded with hydrogen.

PTL 2 proposes an inorganic/organic hybrid film having an inorganic 3D mesh structure mainly having siloxane bonds as a skeleton and having at least one of the cross-linking oxygens substituted by an organic group or hydrogen atom.

PTL 3 proposes a method of producing an insulating film by adding a metal alkoxide of a specific metal or its derivative to silicon alkylside or an organoalkoxysilane and performing hydrolysis and a condensation reaction.

### [CITATION LIST]

### [PATENT LITERATURE]

[PTL 1] Japanese Unexamined Patent Publication No. 2004-291453
[PTL 2] Japanese Unexamined Patent Publication No. 2003-247078
[PTL 3] Japanese Unexamined Patent Publication No. 11-193329

### [NONPATENT LITERATURE]

[NPL 1] Nippon Steel & Sumitomo Metal Technical Report, No. 407 (2017), p. 30 to 35 (English version: No.107 (2017). P.30 to 35)

### SUMMARY

### [TECHNICAL PROBLEM]

Devices such as CIGS type solar cells and all solid-state cells requiring the finished products be annealed at 600°C to 700°C or so are appearing. Insulating films with heat resistance are therefore being demanded. Further, the metal sheets used as the substrates for these devices have relief structures on their surfaces due to rolling etc. (NPL 1). For this reason, to secure an insulating ability, a certain extent of thickness of film becomes required. The necessary thickness depends also on the applied voltage, but it is known from experience that in the case of a cell with a power generation of several volts per unit cell, 0.5 µm or more of thickness is required.

An inorganic film not containing any organic groups such as an SiO₂ film, Al₂ O₃ film, or ZrO₂ film easily cracks if the film thickness is more than 0.3 µm or so. On the other hand, in a silica film containing organic groups such as disclosed in PTLs 1 to 3, the organic groups decompose due to heat during high temperature heat treatment and therefore cracks easily form in the film. If cracks form in the film, they are liable to lead to peeling of the film itself.

The present invention has as its technical issue obtaining a metal sheet having an insulating film where even when the thickness of the insulating film is 0.5 µm or more and the sheet is annealed at 600°C to 750°C (below, sometimes referred to as "product annealing"), the formation of cracks is suppressed, and has as its object the provision of such a metal sheet having an insulating film.

### [SOLUTION TO PROBLEM]

The inventors proceeded with development focusing on organic group-containing silica films, in particular silica films containing methyl groups high in heat resistance, from the viewpoint of securing flexibility as an insulating film while obtaining heat resistance. A methyl group-containing silica film is formed by applying a coating agent containing a partial hydrolysis-condensation reaction product of tetraalkoxysilane and methyltrialkoxysilane and performing heat treatment in a nitrogen atmosphere at about 400 to 450°C (below, sometimes referred to as "film-forming heat treatment"). However, if heating this film to close to 600°C, the methyl groups start to decompose due to heat and if heating to close to 700°C, it is confirmed that substantially the entire amount of methyl groups is consumed. Due to this, it is believed that the smaller the content of the methyl groups, the less the change in volume and film structure accompanying consumption of the methyl groups and harder it is form cracks to form. On the other hand, if the content of the methyl groups is small, the properties approach those of an inorganic SiO₂ film. At a film thickness of more than 0.3 µm, cracks end up forming due to the 400 to 450°C heat treatment at the time of film formation (film-forming heat treatment).

The inventors prepared several types of coating agents so that the ratios of tetraalkoxysilane and methyltrialkoxysilane became constant, that is, so that the amounts of methyl groups consumed by 600°C or more heating became the same, and proceeded with R&D for changing the end groups of the methylsiloxane polymer of the solid component of the coating agent. As a result, they discovered that in a methylsiloxane polymer film after heat treatment, the mesh structure due to the Si-O-Si bonds (siloxane bonds) is not formed close-knit but that if a certain extent of end groups remain and further alkoxy groups are present in a suitable amount as end groups, cracks will not develop even with product annealing at 600°C to 750°C. The present invention was made based on this discovery and has as its gist the following:
[1] A metal sheet having an insulating film,
   in which metal sheet having an insulating film,
   the insulating film containing a methylsiloxane polymer,
   the methylsiloxane polymer having a ratio of methyl groups with respect to the total Si of 30 mol% or more and 70 mol% or less,
   a ratio of a total of the Si-OR bonds and Si-OH bonds in the bond arms of the nonmethyl group bonds comprised of all bond arms of Si minus the Si-CH₃ bonds (methyl group bonds) is 8.0% or more and 11.0% or less, and
   a ratio of the Si-OR bonds (alkoxy group bonds) in the bond arms of the nonmethyl group bonds is 1.0% or more and 4.0% or less.
   where, R represents an alkyl group and Cₙ H_{2 n} -OCₘ H_{2 m + 1} group (where, "n" and "m" are natural numbers).
[2] The metal sheet having an insulating film according to [1] wherein a ratio of bonds represented by Si-OCₙ H_{2 n} -OCₘ H_{2 m + 1} among the Si-OR bonds is 4% or more and 16% or less.
   where, "n" and "m" are natural numbers.
[3] The metal sheet having an insulating film according to [1] or [2] wherein the metal sheet is one type selected from stainless steel foil, titanium foil, and aluminum foil.

### [ADVANTAGEOUS EFFECTS]

According to the metal sheet having an insulating film according to the present invention, it is possible to obtain a metal sheet having an insulating film having a 0.5 µm or more film thickness which is free from formation of cracks even with product annealing at 600°C to 750°C.

### BRIEF DESCRIPTION OF DRAWINGS

FIG. 1 is a conceptual view showing an image of a molecular structure of a methylsiloxane polymer.
FIG. 2 is a conceptual view for explaining bonds derived from methyltrialkoxysilane and bonds derived from tetraalkoxysilane as types of bond arms of Si.
FIG. 3 is a conceptual view showing an example of a partial structure of an Si-OR bond.

### DESCRIPTION OF EMBODIMENTS

Below, the content of the present invention will be explained using as an example one embodiment of the present invention (below, referred to as the "present invention").

### [Constitution of Insulating Film]

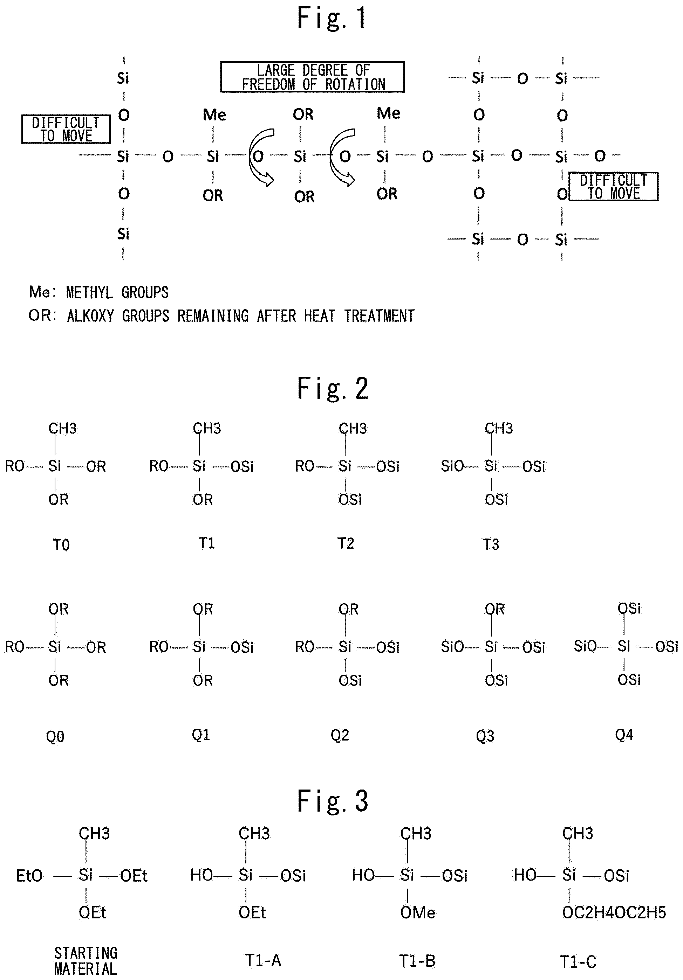

The inventors discovered that in an insulating film including a methylsiloxane polymer after film-forming heat treatment, rather than the mesh structure caused by Si-O-Si bonds (polymer structure) being formed close-knit, when, as shown in FIG. 1, a certain extent of end groups remain and further a suitable amount of alkoxy groups (OR groups) are present as end groups, cracks do not form at the time of product annealing at 600°C or more.

If a film containing methyl groups is heated to 600°C or more, the methyl groups will decompose. For this reason, to keep cracks from forming after product annealing, it is desirable that the Si-O-Si mesh structure be reconfigured during product annealing and that a silica film with few end groups be formed. If there are alkoxy groups and silanol groups copresent as end groups at the stage after product annealing, as shown in FIG. 1, the part where the Si-O-Si are connected in a single chain shape can freely rotate and it is guessed that the mesh structure becomes easily reconfigured such as with the formation of new Si-O-Si after the decomposition of the methyl groups.

As end groups of a film after film-forming heat treatment, besides alkoxy groups (OR), silanol groups (Si-OH) may also be considered. If performing heat treatment in an inert gas, the dehydrogenation condensation reaction of the silanol groups begins from near 300°C, while the heat decomposition of alkoxy groups starts around 500°C close to the heat decomposition temperature of the methyl groups. For this reason, if the end groups are only silanol groups, the methyl groups break down after the skeleton of the mesh structure of Si-O-Si is formed and reconfiguration of the mesh structure becomes difficult. On the other hand, if the end groups are silanol groups and alkoxy groups, the alkoxy groups are higher in bulk than silanol groups, so large spaces can be secured in the mesh structure, rotation of the mesh structure becomes easy, and reconfiguration of the mesh structure is believed promoted. The insulating film after the film-forming heat treatment according to the present invention (insulating film formed on metal sheet) has suitable amounts of methyl groups (CH₃ groups) and alkoxy groups (OR groups) present as end groups.

### [Structure of Methylsiloxane Polymer]

A "methylsiloxane polymer" is a siloxane polymer containing methyl groups as organic groups directly bonded with Si. Si is a tetravalent atom and has four so-called "bond arms". In order to be incorporated in a siloxane polymer, the presence of at least one or more Si-O-Si bonds is sought, therefore there are a maximum of three methyl groups which can bond with one Si atom.

The Si atoms in a methylsiloxane polymer (Si atoms focused on in the partial structures) bond with the end groups CH₃ (methyl groups), OH (hydroxyl groups), and OR (alkoxy groups) and bond with other Si atoms with OSi siloxane bonds to polymerize. That is, the Si atoms in a methylsiloxane polymer are present in Si-OSi bonds (in this Description, also called "siloxane bonds", sometimes simply expressed as "Si-OSi" or "Si-O-Si"), Si-CH₃ bonds (also called "methyl group bonds", sometimes simply expressed as "Si-CH₃ "), Si-OH bonds (also called "silanol group bonds". sometimes simply expressed as "Si-OH"), and Si-OR bonds (also called "alkoxy group bonds". sometimes simply expressed as "Si-OR").

"OR" indicates an alkoxy group. Alkoxy groups derived from the tetraalkoxysilane used as a starting material, alkoxy groups derived from methyltrialkoxysilane, and alkoxy groups derived from an organic solvent when hydrolyzing the starting material (an organic solvent different from the alcohol formed as a result of hydrolysis of tetraalkoxysilane or methyltrialkoxysilane) may be considered.

Si-OH bonds are end groups having reactivity able to be condensed to form Si-OSi. Si-OR bonds are resistant to reaction as they are, but at the steps of drying treatment and heat treatment after applying a coating agent on a metal sheet, react with moisture and are hydrolyzed thereby changing to Si-OH. After changing to Si-OH, they can be condensed to form Si-O-Si bonds. That is, the bonds other than the methyl group bonds (Si-CH₃ ) in the bonds of Si of the partial structures of a methylsiloxane polymer (called "nonmethyl group bonds") ideally can all become siloxane bonds (Si-OSi) due to hydrolysis or condensation. However, in practice, not all is hydrolyzed or condensed. There are ends at the polymer. These become Si-OH or Si-OR. Therefore, the ratio of siloxane bonds (Si-OSi) in the bonds after removing the methyl group bonds (Si-CH₃ bonds) from all Si is defined as the condensation degree.

A methylsiloxane polymer can be made using as starting materials methyltrialkoxysilane, dimethyldialkoxysilane, trimethylalkoxysilane, polydimethylsiloxane, etc. Further, these starting materials can be mixed and tetraalkoxysilane, colloidal silica, etc. used to thereby control the blending ratio of Si and methyl groups in the methylsiloxane polymer film.

These starting materials can be hydrolyzed in an organic solvent to obtain a coating agent which is then heat cured by film-forming heat treatment to prepare a film. For example, the hydrolysis reaction of methyltrialkoxysilane is based on the following reaction.

CH₃ Si(OR)₃ +H₂ O → CH₃ Si(OR)₂ (OH)+ROH

In this way, if using a partially hydrolyzed product obtained by hydrolyzing only part of the alkoxy groups, it becomes possible to leave alkoxy groups in the dried film after coating. Furthermore, if heat treating such a dried film under specific conditions, it becomes possible to leave a certain amount of alkoxy groups in the heat treated film. That is, by performing the optimal drying treatment and film-forming heat treatment according to the starting material, a high heat resistant methylsiloxane polymer controlled in amounts and types of end groups of the methylsiloxane polymer and able to withstand 600°C or more product annealing is obtained.

### [Methyl Groups With Respect to Total Si of 30 mol% or More and 70 mol% or Less]

A silica coating containing methyl groups generally has heat resistance, but it has been confirmed that if heated to close to 600°C, head decomposition starts and if heated to close to 700°C, substantially the entire amount is consumed. If the ratio of methyl groups to the total Si is small, there will be little change in the volume or film structure along with the consumption of the methyl groups at the time of product annealing, therefore cracks will become hard to form. However, if the ratio of methyl groups is too small, embrittlement will occur approaching the properties of an inorganic SiO₂ film. If becoming 0.5 µm or more in film thickness, the amount of shrinkage at the time of drying treatment and film forming heat treatment will become greater, and cracks will easily form due to heat shock. Therefore, the ratio of methyl groups may be 30 mol% or more with respect to the total Si, preferably may be 32 mol% or more, 35 mol% or more, 37 mol% or more, 39 mol% or more, or 40 mol% or more.

On the other hand, if the ratio of methyl groups to the total Si is large, the flexibility will increase and the tendency of embrittlement of the SiO₂ film will become weaker, but on the other hand, the changes in volume and film structure accompanying consumption of the methyl groups will become greater and cracks will be formed due to those changes. In particular, a large amount of the methyl groups decomposes due to heat at the time of 600°C or more product annealing. Along with this, the mesh structure of Si-O cannot be reconfigured well and the strength of the film as a whole falls. For this reason, the ratio of methyl groups with respect to the total Si may be 70 mol% or less, preferably may be 68 mol% or less, 66 mol% or less, 64 mol% or less, 62 mol% or less, or 60 mol% or less.

### [Method of Finding Ratio of Methyl Groups]

The method of finding the ratio of methyl groups to the total Si will be explained taking as an example a film (heat treated film) obtained by adding methyltriethoxysilane and tetramethoxysilane to 2-ethoxyethanol to hydrolyze it and prepare a coating agent, applying this to a substrate to give a film thickness of 0.6 µm, drying this at 150°C×1 minute in the atmosphere, then heat treating it at 420°C×3 minutes in a nitrogen atmosphere.

The heat treated film is peeled off from the substrate and measured by ^{2 9} Si-NMR. T0, T1, T2, T3 derived from methyltriethoxysilane and Q0, Q1, Q2, Q3, Q4 derived from tetramethoxysilane are present (see FIG. 2). The respective amounts of presence are expressed by mol ratio as t0, t1, t2, t3 and q0, q1, q2, q3, q4. Note that, the ^{2 9} Si-NMR can be measured using for example an AVANCE 400 made by Bruker and the DD (dipolar decoupling)/MAS (magic angle spinning) method using hexamethylcyclotrisiloxane as the standard substance. From the thus obtained amounts of presence, if making the total of t0+t1+t2+t3 and q0+q1+q2+q3+q4 1 mole, it is possible to find the number of moles of Si-CH₃ bonds with respect to 1 mole of Si from the ratio of t0+t1+t2+t3 and q0+q1+q2+q3+q4.

### [Total Ratio of Si-OR and Si-OH in Nonmethyl Group Bonds: 8.0 to 11.0%]

The ratio of the total of the Si-OR bonds and Si-OH bonds in the nonmethyl group bonds (below, the two bonds will sometimes be combined and referred to the "nonmethyl end group bonds") in the methylsiloxane polymer film may be 8.0% or more and 11.0% or less. If the total ratio of the nonmethyl end group bonds in the nonmethyl group bonds becomes smaller, the number of end groups become smaller, that is, a close-knit methylsiloxane polymer film with an extremely high condensation degree is obtained. In such a case, reconfiguration of the siloxane mesh structure accompanying decomposition of the methyl groups during the annealing becomes difficult and cracks become easily formed in the annealed film. For this reason, the ratio of end group bonds at the nonmethyl group bonds may be 8.0% or more. Preferably, it may be 8.2% or more, 8.4% or more, 8.6% or more, 8.8% or more, or 9.0% or more.

On the other hand, if the ratio of nonmethyl end group bonds becomes greater, this means there will be many end groups present in the film after film-forming heat treatment (below, sometimes called the "heat treated film"). The film strength will fall, therefore cracks will easily form in the heat treated film. For this reason, the ratio of nonmethyl end group bonds in the nonmethyl group bonds may be 11.0% or less. Preferably, it may be 10.8% or less, 10.6% or less, 10.4% or less, 10.2% or less, or 10.0% or less.

### [Ratio of Si-OR Bonds to Nonmethyl Group Bonds: 1.0 to 4.0%]

Looking at the Si-OR bonds (alkoxy group bonds), when for example hydrolyzing tetramethoxysilane and methyltriethoxysilane in propanol, three types of alkoxy groups of methoxy groups derived from tetramethoxysilane, ethoxy groups derived from methyltriethoxysilane, and propyl groups formed by reaction of the hydrolyzed SiOH with the propanol are produced. Further, when hydrolyzing tetramethoxysilane and methyltrimethoxysilane in 2-methoxyethanol, in addition to methoxy groups, new alkoxy groups are formed derived from 2-methoxyethanol and expressed by Si-OC₂ H₄ -OCH₃ . In this way, not only the alkoxy groups derived from the starting materials, but even those formed from the organic solvent used at the time of hydrolysis reaction of the starting materials are treated as "Si-OR bonds (alkoxy group bonds)".

Part of the Si-OR contained in the coating agent is hydrolyzed to produce alcohol due to the moisture in the atmospheric gas during the coating, drying, and heat treatment and changes to Si-OH. Further, the part is decomposed by heat during heat treatment to change to Si-OH or create Si-O-Si bonds. The Si-OR neither hydrolyzed nor decomposed by heat in the state as is in the methyl group-containing silica coating.

Alkoxy group bonds (Si-OR) are higher in bulk as end groups compared with methyl group bonds (Si-CH₃ ) and can form spaces in the molecular structure of the methyl group-containing methylsiloxane polymer film (see FIG. 1). In FIG. 1, the straight chain Si-O-Si bonds are large in degree of freedom of rotation like polydimethylsiloxane. For this reason, when a methyl group-containing silica coating containing Si-OR in a certain amount or more is heated during 600 to 750°C annealing and the methyl groups decompose, the straight chain shaped Si-O-Si bond part is utilized for rotation to obtain the most suitable stable structure as an inorganic silica coating, that is, the siloxane skeleton is reconfigured and the annealing resistance becomes higher.

If the ratio of Si-OR bonds in the nonmethyl bonds is small, reconfiguration of the siloxane skeleton such as shown in FIG. 1 becomes difficult and cracks easily form in the insulating film after product annealing. For this reason, the ratio of Si-OR bonds (alkoxy group bonds) with respect to the nonmethyl group bonds may be 1.0% or more. Preferably, it may be 1.2% or more, 1.4% or more, 1.6% or more, 1.8% or more, or 2.0% or more.

On the other hand, if the content of Si-OR is large, there will be numerous high bulk end groups in the heat treated film, therefore cracks will easily form. For this reason, the ratio of Si-OR bonds in the nonmethyl group bonds may be 4.0% or less. Preferably, it may be 3.8% or less, 3.6% or less, 3.4% or less, 3.2% or less, or 3.0% or less.

### [Method of Finding Ratios of Si-OR and Si-OH]

The method of finding the ratios of Si-OR and Si-OH will be explained with reference to the method of finding the ratio of methyl groups. T0, T1, T2, T3 derived from methyltriethoxysilane and Q0, Q1, Q2, Q3, Q4 derived from tetramethoxysilane are present. The respective amounts of presence are expressed by mol units as t0, t1, t2, t3 and q0, q1, q2, q3, q4. The total mol% of Si-OR and Si-OH at this time can be found by t0×3+t1×2+t2×1+q0×4+q1×3+q2×2+q3×1.

Next, the method of finding the mol% of Si-OR will be explained. From the ^{1 3} C-NMR, it is understood that the partial structures of Si-CH₃ , Si-OCH₃ , Si-OC₂ H₅ , and Si-OC₂ H₄ OC₂ H₅ are present, therefore the mol% can be found from the area ratios of the respective peaks. The mol% of Si-CH₃ bonds is found as explained above, therefore this is used to find the mol% from the area ratios of the peaks of the three types of alkoxy groups. These can be added together to find the mol% of Si-OR. Note that, the ^{1 3} C-NMR can be measured using for example an AVANCE III HD400 made by Bruker and the DD (dipolar decoupling)/MAS (magic angle spinning) method using the methyl groups of hexamethylbenzene as the standard substance.

Incidentally, the mol% of Si-OH can be found by subtracting the mol% of the Si-OR from the total mol% of the Si-OR and Si-OH.

### [Si-OCₙ H_{2 n} -OCₘ H_{2 m + 1} Bonds in Si-OR Bonds]

The methylsiloxane polymer film may also contain structures represented by Si-OCₙ H_{2 n} - OCₘ H_{2 m} + 1 in the Si-OR. Si-OCₙ H_{2 n} -OCₘ H_{2 m +} 1 contains ether bonds compared with the general methoxy groups, ethoxy groups, propoxy groups, and other alkoxy groups so becomes higher in bulk by that amount and can enlarge the spaces between molecules. For this reason, reconfiguration of the siloxane skeleton during annealing becomes easy and a close-knit silica film with few defects is obtained after annealing. For this reason, it is possible to withstand even annealing of a higher temperature than 750°C.

If the ratio of Si-OCₙ H_{2 n} -OCₘ H_{2 m + 1} in the Si-OR as a whole is small, there are fewer places where the space between molecules can be enlarged, therefore reconfiguration of the siloxane skeleton becomes difficult. For this reason, the ratio of Si-OCₙ H_{2 n} -OCₘ H_{2 m + 1} in the Si-OR as a whole may be made 4.0% or more, preferably may be made 5.0% or more, 6.0% or more, 7.0% or more, or 8.0% or more.

On the other hand, if the ratio of Si-OCₙ H_{2 n} -OCₘ H_{2 m + 1} in the Si-OR as a whole becomes greater, reconfiguration of the siloxane skeleton filling in the large spaces after heat decomposition of Si-OCₙ H_{2 n} -OCₘ H_{2 m + 1} during annealing becomes difficult and some defects remain after annealing. For this reason, heat resistance up to 750°C is obtained, but the effect of obtaining heat resistance at a higher temperature than that becomes smaller. For this reason, the ratio of Si-OCₙ H_{2 n} -OCₘ H_{2 m + 1} in the Si-OR as a whole may be 16.0% or less. Preferably it may be 15.0% or less, 14.0% or less, 13.0% or less, or 12.0% or less.

### [Film Thickness of Insulating Film]

The film thickness when forming a methylsiloxane polymer film on a metal sheet is desirably 0.5 µm or more. If thinner than 0.5 µm, sometimes it is not possible to completely cover the surface relief of the metal sheet. The upper limit of the film thickness is not particularly prescribed, but if the film thickness becomes greater, cracks become more readily formed after the film-forming heat treatment and further after high temperature product annealing. For this reason, the film thickness is desirably 1.3 µm or less or 1.2 µm or less.

### [Metal Sheet]

The type of the metal sheet is not particularly limited. In general, aluminum (Al), titanium (Ti), copper (Cu), and stainless steel metal sheets (foils) are on the market and can be used as the metal sheet. Among these, stainless steel sheet (stainless steel foil), which is easy to handle even at a 750 degree or more high temperature, is preferable. The method of production of the metal sheet is also not particularly limited. It can be produced by an ordinary method.

The thickness of the metal sheet is not particularly limited. The insulating film is formed on the surface of the metal sheet constituting the substrate, therefore the sheet thickness is not limited. However, a sheet thickness of a range enabling industrial production is desirable. For example, if stainless steel foil, the sheet thickness is preferably 1 µm or more and 100 µm or less.

### [Method of Production of Metal Sheet Having Insulating Film]

In general, the commercially available tetraalkoxysilane, methyltrialkoxysilane and dimethyldialkoxysilane as starting materials do not contain Si-OCₙ H_{2 n} -OCₘ H_{2 m + 1}. To introduce such alkoxy groups into the heat treated film, ethyl cellosolve, methyl cellosolve, or another organic solvent may be used to hydrolyze the starting materials and the following substitution reaction may be promoted between the thus produced silanol groups and the ethyl cellosolve, methyl cellosolve, or other organic solvent so as to introduce the groups.

Si(OH)₄ +OCₙ H_{2 n} -OCₘ H_{2 m + 1} → Si(OH)3 (Si-OCₙ H2 ₙ -OCₘ H_{2 m + 1} )+H2 O

The method of production of the metal sheet and the method of formation of the insulating film at the metal sheet surface are not particularly limited. The metal sheet can be produced by an ordinary method, an insulating film coating agent can be applied and dried on the metal sheet surface by an ordinary method, and film-forming heat treatment (curing processing) can be performed to obtain a metal sheet with an insulating film.

The method of forming a methylsiloxane polymer coating on a metal sheet is also not particularly limited. At the present, as industrially utilizable methods, for example spin coating, dip coating, gravure coating, die coating, etc. may be mentioned. The methylsiloxane polymer coating can be applied to one surface or both surfaces of the metal sheet. Gravure coating or die coating is a coating system suitable for continuous coating, therefore is preferable in the point of raising productivity.

The drying method after coating is also not particularly limited. For example, a drying furnace or oven set to a 60°C or more and 200°C or less temperature can be used. The drying time is for example 30 seconds or more and 5 minutes or less. These drying conditions can be selected in accordance with the type of the coating agent and the film thickness. By drying at a relatively low temperature, the alcohol evaporation pressure in the drying furnace becomes higher, the alcohol vapor and silanol groups in the dried film react to form alkoxy groups, and the amount of alkoxy groups in the dried film can be increased over the amount of alkoxy groups contained in the end groups of the siloxane polymer in the coating agent.

The film-forming heat treatment method is also not particularly limited. From the viewpoint of suppressing oxidation of the surface, the treatment can be performed in a nonoxidizing atmosphere, a nitrogen, argon, or other inert gas atmosphere, or a vacuum. The heat treatment temperature differs depending on the type or thickness of the coating agent, so may be suitably selected according to the coating agent. For example, heat treatment can be performed holding at a 380°C or more and 460°C or less temperature for 1 minute or more and 60 minutes or less. The heat treatment may be performed in a batch furnace or in a furnace enabling roll-to-roll type continuous heat treatment.

### EXAMPLES

### [Example 1]

The coating agents A to J used in Example 1 were prepared as follows based on the blending ratios of Table 1 (Table 1-1 and Table 1-2 together referred to as "Table 1"). For each of the coating agents A, B, D, E, F, G, and H, the ethanol was divided into two parts, one part of the ethanol was placed in a 1L (liter) round bottom flask, the numbers of moles of titanium ethoxide and ethyl acetoacetate described in Table 1 were added, and the mixture was stirred by a magnetic stirrer for 15 minutes. After that, methyltriethoxysilane and tetramethoxysilane were added and the mixture was further stirred for 15 minutes. The remaining half part of the ethanol, water, and acetic acid were added to a 500 mL beaker. At the 1L round bottom flask, a drop device and roller pump were set so enable the content of the 500 mL beaker to be dropped in 2.5 hours. The mixture was further stirred for 30 minutes after these finished being dropped. After that, methylethylketone (MEK) was added to adjust the solids concentration etc.

The coating agent C was prepared as follows based on the blending ratios of Table 1. The methanol was divided into two parts, one part of the methanol was placed in a 1L (liter) round bottom flask, niobium ethoxide and acetyl acetone were added, and the mixture was stirred by a magnetic stirrer for 15 minutes. After that, methyltriethoxysilane and tetramethoxysilane were added and the mixture was further stirred for 15 minutes. The remaining half part of the methanol, water, and acetic acid were added to a 500 mL beaker. At the 1L round bottom flask, a drop device and roller pump were set so enable the content of the 500 mL beaker to be dropped in 2.5 hours. The mixture was further stirred for 30 minutes after these finished being dropped. After that, methylethylketone (MEK) was added to adjust the solids concentration etc.

The coating agent I was prepared based on the formulation of Table 1 as follows: IPA-ST is colloidal silica made by Nissan Chemical Corporation. Solids concentration 30 wt% and diameter 12 nm colloidal silica is dispersed in isopropanol.
In Table 1, the blended amounts are expressed by weight %. For reference, the molar ratios of ingredients other than IPA-ST are also prescribed. First, the ethanol was divided into two parts. One part of the ethanol was placed in a 1L (liter) round bottom flask, titanium ethoxide and ethyl acetoacetate were added, and the mixture was stirred by a magnetic stirrer for 15 minutes. After that, methyltriethoxysilane and IPA-ST were added and the mixture was further stirred for 15 minutes. The remaining half part of the ethanol, water, and acetic acid were added to a 500 mL beaker. At the 1L round bottom flask, a drop device and roller pump were set so enable the content of the 500 mL beaker to be dropped in 2.5 hours. The mixture was further stirred for 30 minutes after these finished being dropped. After that, methylethylketone (MEK) was added to adjust the solids concentration etc.

The coating agent J was prepared as follows based on the blending ratios of Table 1. First, the 2-ethoxyethanol was divided into two parts. One part of the 2-ethoxyethanol was placed in a 1L (liter) round bottom flask, titanium ethoxide and ethyl acetoacetate were added, and the mixture was stirred by a magnetic stirrer for 15 minutes. After that, methyltriethoxysilane, diethoxydimethylsilane, and tetramethoxysilane were added and the mixture was further stirred for 15 minutes. The remaining half part of the ethanol, water, and acetic acid were added to a 500 mL beaker. At the 1L round bottom flask, a drop device and roller pump were set so enable the content of the 500 mL beaker to be dropped in 2.5 hours. The mixture was further stirred for 30 minutes after these finished being dropped. After that, methylethylketone (MEK) was added to adjust the solids concentration etc.

Next, the obtained coating agent was applied to stainless steel foil. For the stainless steel foil. SUS444 thickness 10 µm SB (Super Bright) treated foil was used. An AFM was used to measure the surface roughness of the stainless steel foil by a field size of 100 um square, whereupon the Ra was 28.3 nm and the Rmax was 700 nm. Next, the stainless steel foil was cut to 12 cm square to prepare a sample. The obtained coating agent was applied by a spin coater to the surface of the sample of the stainless steel foil. The coated thickness was controlled by the speed of the spin coater. The speed of the spin coater was adjusted so that the applied film thickness (film thickness after coating by spin coater) became about 0.5 µm. The measured values of the applied film thickness are shown in Table 2 (Table 2-1 to Table 2-3 together referred to as Table 2).

The spin coated sample was placed in an oven set to a drying temperature of 80°C or 150°C and made to dry for a drying time of 1 to 5 hours in the atmosphere. The drying temperature and drying time were as described in Table 2.

Next, the dried sample was heat treated in an infrared heating furnace. The heat treatment temperature, heat treatment time, and heat treatment atmosphere of each sample were as shown in Table 2.

After that, simulating the time of production of a device, an infrared heating furnace was used to heat the sample in nitrogen to 750°C and the sample was held there for 30 minutes. After the heat treatment and after annealing at 750°C, the sample was visually checked for whether cracks were formed in the film. Samples where no cracks could be confirmed were evaluated as good (G), while samples where cracks could be observed were evaluated as poor (P). Samples where no cracks were formed even after both heat treatments were evaluated as passing (G) while samples where cracks were formed at least at one were evaluated as failing (P). The results of these evaluations are shown in Table 2.

The insulating film was removed from the metal sheet formed with the insulating film and the ratio of the nonmethyl end group bonds with respect to the nonmethyl group bonds in the insulating film (ratio of total number of S-OR bonds and S-OH bonds) and ratio of number of Si-OR bonds were found. The ratios found are shown in Table 2.

The heat treated film was peeled off from the substrate and measured for ^{2 9} Si NMR of the solids using an ADVANCE HD400 made by Bruker. The DD (dipolar decoupling)/MAS (magic angle spinning) method was used for measurement using the standard substance hexamethylcyclotrisiloxane. The molecular structure of the applied insulating film was analyzed by solid ^{2 9} Si-NMR to find the ratio of Si-CH₃ bonds and the ratio of the Si-OR and SiOH groups with respect to the total number of moles of Si. The mol% of Si-CH₃ , Si-OCH₃ , Si-OC₂ H₅ , Si-OC₂ H₄ OC₂ H₅, and other partial structures with respect to the Si was calculated by combining the results of solid ^{1 3} C-NMR and the results of ^{2 9} Si-NMR.

The solid ^{1 3} C-NMR was performed using an ADVANCE NEO HD400 made by Bruker by the DD (dipolar decoupling)/MAS (magic angle spinning) method using the methyl groups of the standard substance hexamethylbenzene.

In Sample No. 21, there were few methyl groups in the heat treated film, therefore the heat treated film became hard and brittle and cracks formed in the heat treated film.

In Sample No. 22, the total of the Si-OR bonds and SiOH bonds of all of the bond arms of Si minus the Si-CH₃ bonds and the ratio of the Si-OR bonds at the bond arms of all of the bond arms of Si minus the Si-CH₃ bonds were both too low, the heat treated film became a close-knit structure, and on top of that there were also few bulky OR groups. Therefore, cracks were formed at the time of annealing.

Sample No. 23 and Sample No. 2 were prepared by the same process up to the dried film and were changed only in heat treatment conditions. Sample No. 23 had a high heat treatment temperature, therefore the total of the Si-OR bonds and SiOH bonds at the bond arms of all of the bond arms of Si minus the Si-CH₃ bonds became smaller and cracks were formed at the time of annealing.

Sample No. 24, Sample No. 25, and Sample No. 3 are examples of spin coating the same coating agent to the same film thickness but changing the drying conditions. With the drying conditions of Sample No. 24 and Sample No. 25, the amount of OR groups fell too much after heat treatment and cracks were formed at the time of annealing.

In Sample No. 26, the total of the Si-OR bonds and SiOH bonds at the bond arms of all of the bond arms of Si minus the Si-CH₃ bonds was too great, therefore the film strength of the heat treated film failed to rise and cracks formed.

Sample No. 27 was the same as Sample No. 6 up to the stage of the dried film, but the heat treatment time was short, therefore during the heat treatment, the OR groups could not be made to sufficiently react, too many OR groups remained, and cracks formed at the time of annealing.

### [Example 2]

In the formulation of the standard coating agent shown in Sample No. 4 of Table 2, the organic solvent was changed from ethanol to 2-ethoxyethanol, 2-methoxyethanol, and 2-butoxyethanol and part of the Si-OR group bonds was changed to Si-OCₙ H_{2 n} -OCₘ H_{2 m + 1} bonds to prepare a coating agent in the same way as Example 1. The metal sheet was coated and was subsequently evaluated in the same way as Example 1. The drying was performed in the atmosphere in an oven set to 150°C for 1 minute. The heat treatment was performed in a nitrogen atmosphere at 420°C×1.5 minutes. However, the high temperature annealing corresponding to product annealing was performed at 750°C, the presence of any cracks at the film surface was evaluated, samples with no cracks were further annealed at 765°C, and the presence of any cracks at the film surface was evaluated. The results of these evaluations are shown in Table 3.

Sample No. 4 did not exhibit any cracks even after 750°C annealing, but while extremely slight, fine cracks were observed after 765°C annealing.

**[Table 1-1]**

| | Coating agent | A | B | C | D | E | F |
|---|---|---|---|---|---|---|---|
| | (mol%) | | | | | | |
| | Methyltriethoxysilane | 0.29 | 0.31 | - | 0.50 | 0.50 | 0.50 |
| | Methyltrimethoxysilane | - | - | 0.5 | - | - | - |
| | Diethoxydimethylsilane | - | - | - | - | - | - |
| | Tetramethoxysilane | 0.71 | 0.69 | 0.5 | 0.50 | 0.50 | 0.50 |
| | Titanium ethoxide | 0.0030 | 0.0030 | - | 0.0048 | 0.0030 | 0.0030 |
| | Niobium ethoxide | - | - | 0.0030 | - | - | - |
| Coating agent materials | Ethyl acetoacetate | 0.0060 | 0.0060 | - | 0.0096 | 0.0060 | 0.0060 |
| | Acetyl acetone | - | - | 0.0060 | - | - | - |
| | Acetic acid | 0.0050 | 0.0050 | 0.0050 | 0.0050 | 0.0050 | 0.0050 |
| | Water | 2.00 | 2.00 | 2 | 2.00 | 5.00 | 2.00 |
| | Ethanol | 3.00 | 3.00 | - | 3.00 | 3.00 | 3.00 |
| | 2-ethoxyethanol | - | - | - | - | - | - |
| | Methanol | - | - | 4 | - | - | - |
| | MEK | 1.50 | 1.50 | 1.6 | 1.50 | 1.50 | 1.50 |

**[Table 1-2]**

| | Coating agent | G | H | | I | J |
|---|---|---|---|---|---|---|
| | (mol%) | | | Blended amount (g) | | |
| | Methyltriethoxysilane | 0.50 | 0.50 | 123.33 | 0.69 | 0.40 |
| | Methyltrimethoxysilane | - | - | - | - | - |
| | Diethoxydimethylsilane | - | - | - | - | 0.10 |
| | Tetramethoxysilane | 0.50 | 0.50 | 62.00 | - | 0.50 |
| | Titanium ethoxide | 0.0022 | 0.0030 | 0.68 | 0.003 | 0.0030 |
| | Niobium ethoxide | - | - | - | - | - |
| Coating agent materials | Ethyl acetoacetate | 0.0044 | 0.0060 | 0.78 | 0.006 | 0.0060 |
| | Acetyl acetone | - | - | - | - | - |
| | Acetic acid | 0.0050 | 0.0050 | 0.30 | 0.005 | 0.0050 |
| | Water | 2.00 | 1.55 | 27.00 | 1.50 | 2.00 |
| | Ethanol | 3.00 | 3.00 | 138.21 | 1.50 | - |
| | 2-ethoxyethanol | - | - | - | - | 1.50 |
| | Methanol | - | - | - | - | - |
| | MEK | 1.50 | 1.50 | 108.17 | 3.00 | 1.50 |

**[Table 2-1]**

| | Sample No. 21 | Sample No. 1 | Sample No. 22 | Sample No. 23 | Sample No. 2 |
|---|---|---|---|---|---|
| Type of coating solution | A | B | C | D | D |
| Drying temperature | 150 | 150 | 150 | 150 | 150 |
| Drying time | 1 | 1 | 1 | 1 | 1 |
| Heat treatment temperature | 430 | 430 | 410 | 440 | 425 |
| Heat treatment time | 2 | 2 | 1 | 2 | 2 |
| Heat treatment atmosphere | Nitrogen | Nitrogen | Nitrogen | Nitrogen | Nitrogen |
| Mol% of methyl groups with respect to Si | 29 | 31 | 50 | 50 | 50 |
| Ratio of total of Si-OR bonds and SiOH bonds in bond arms of all bond arms of Si minus Si-CH3 bonds of 8% or more and 11% or less | 9.8 | 9.8 | 6 | 7.8 | 8.2 |
| Ratio of Si-OR bonds in bond arms of all bond arms of Si minus Si-CH3 bonds of 1% or more and 4% or less | 2.3 | 2.3 | 0.5 | 1.2 | 1.3 |
| Coated thickness (um) | 0.51 | 0.51 | 0.55 | 0.55 | 0.55 |
| Crack evaluation (after heat treatment) | P | G | G | G | G |
| Crack evaluation (after annealing) | Not performed | G | P | P | G |
| Judgment | P | G | P | P | G |
| Remarks | Comp. ex. | Ex. | Comp. ex. | Comp. ex. | Ex. |

**[Table 2-2]**

| | Sample No. 24 | Sample No. 25 | Sample No. 3 | Sample No. 4 | Sample No. 5 |
|---|---|---|---|---|---|
| Type of coating solution | E | E | E | F | G |
| Drying temperature | 150 | 120 | 80 | 150 | 150 |
| Drying time | 1 | 2 | 5 | 1 | 1 |
| Heat treatment temperature | 420 | 420 | 420 | 420 | 430 |
| Heat treatment time | 1 | 1 | 1 | 0.8 | 2 |
| Heat treatment atmosphere | Nitrogen | Nitrogen | Nitrogen | Nitrogen | Nitrogen |
| Mol% of methyl groups with respect to Si | 50 | 50 | 50 | 50 | 50 |
| Ratio of total of Si-OR bonds and SiOH bonds in bond arms of all bond arms of Si minus Si-CH3 bonds of 8% or more and 11% or less | 9.5 | 9.8 | 10.2 | 9.5 | 10.8 |
| Ratio of Si-OR bonds in bond arms in bond arms of all bond arms of Si minus Si-CH3 bonds of 1% or more and 4% or less | 0.6 | 0.9 | 1.1 | 2.2 | 3.5 |
| Coated thickness (um) | 0.61 | 0.61 | 0.61 | 0.55 | *0.55* |
| Crack evaluation (after heat treatment) | G | G | G | G | G |
| Crack evaluation (after annealing) | P | P | G | G | G |
| Judgment | P | P | G | G | G |
| Remarks | Comp. ex. | Comp. ex. | Ex. | Ex. | Ex. |

**[Table 2-3]**

| | Sample No. 26 | Sample No. 6 | Sample No. 27 | Sample No. 7 | Sample No. 8 |
|---|---|---|---|---|---|
| Type of coating solution | G | H | H | I | J |
| Drying temperature | 150 | 150 | 150 | 150 | 150 |
| Drying time | 1 | 1 | 1 | 1 | 1 |
| Heat treatment temperature | 420 | 420 | 420 | 410 | 420 |
| Heat treatment time | 2 | 10 | 1 | 4 | 1 |
| Heat treatment atmosphere | Nitrogen | Nitrogen | Nitrogen | Nitrogen | Nitrogen |
| Mol% of methyl groups with respect to Si | 50 | 50 | 50 | 69 | 60 |
| Ratio of total of Si-OR bonds and SiOH bonds in bond arms of all bond arms of Si minus Si-CH3 bonds of 8% or more and 11% or less | 11.1 | 10.5 | 10.7 | 8.3 | 10.5 |
| Ratio of Si-OR bonds in bond arms of all bond arms of Si minus Si-CH3 bonds of 1% or more and 4% or less | 3.5 | 3.9 | 4.1 | 1.3 | 2.5 |
| Coating thickness (um) | 0.55 | 0.55 | 0.55 | 0.65 | 0.81 |
| Crack evaluation (after heat treatment) | P | G | G | G | G |
| Crack evaluation (after annealing) | Not performed | G | P | G | G |
| Judgment | P | G | P | G | G |
| Remarks | Comp. ex. | Ex. | Comp. ex. | Ex. | Ex. |

**[Table 3]**

| | | Sample No. 4 | Sample No. 10 | Sample No. 11 | Sample No. 12 |
|---|---|---|---|---|---|
| | Methyltriethoxysilane | 0.50 | 0.50 | 0.35 | 0.50 |
| | Tetramethoxysilane | 0.50 | 0.50 | 0.65 | 0.50 |
| | Titanium ethoxide | 0.0030 | 0.0030 | 0.0030 | 0.0030 |
| Coating agent materials (mol%) | Ethyl acetoacetate | 0.006 | 0.006 | 0.006 | 0.006 |
| | Acetic acid | 0.0050 | 0.0050 | 0.0050 | 0.0050 |
| | Water | 2.00 | 2.00 | 1.80 | 2.00 |
| | Organic solvent | Ethanol 3.00 | 2-ethoxyethanol 1.50 | 2-methxy ethanol 1.80 | 2-butoxy ethanol 1.10 |
| | MEK | 1.50 | 1.50 | 1.50 | 1.50 |
| Coating | Ratio of total of Si-OR bonds and SiOH bonds in bond arms of all bond arms of Si minus Si-CH3 bonds of 8% or more and 11% or less | 9.5 | 9.3 | 9.3 | 9.4 |
| | Ratio of Si-OR bonds in bond arms of all bond arms of Si minus Si-CH3 bonds of 1% or more and 4% or less | 2.2 | 2.3 | 1.3 | 2.3 |
| | (Ratio of Si-OCnH2n-OCmH2m+1 in SiOR) | 0 | 9.2 | 4.5 | 15.1 |
| | Coating thickness (µm) | 0.57 | 0.57 | 0.57 | 0.57 |
| Crack evaluation | 420°Cx1.5 min (after heat treatment) | G | G | G | G |
| | 750°Cx15 min (after annealing) | G | G | G | G |
| | 765°Cx15 min (after annealing) | G' | G | G | G |
| Judgment | | G | VG | VG | VG |
| Remarks | | Ex. | Ex. | Ex. | Ex. |

### [INDUSTRIAL APPLICABILITY]

The present invention can be utilized for various electronic apparatuses and industrial apparatuses such as solar cells, organic EL devices, and other electronic devices.

## Claims

1. A metal sheet having an insulating film,
in which metal sheet having an insulating film,
the insulating film containing a methylsiloxane polymer,
the methylsiloxane polymer having a ratio of methyl groups with respect to the total Si of 30 mol% or more and 70 mol% or less,
a ratio of a total of the Si-OR bonds and Si-OH bonds in the bond arms of the nonmethyl group bonds comprised of all bond arms of Si minus the Si-CH₃ bonds (methyl group bonds) is 8.0% or more and 11.0% or less, and
a ratio of the Si-OR bonds (alkoxy group bonds) in the bond arms of the nonmethyl group bonds is 1.0% or more and 4.0% or less.
where, R represents an alkyl group and Cₙ H_{2 n} -OCₘ H_{2 m + 1} group (where, "n" and "m" are natural numbers).

2. The metal sheet having an insulating film according to claim 1, wherein a ratio of bonds represented by Si-OCₙ H_{2 n} -OCₘ H_{2 m + 1} among the Si-OR bonds is 4% or more and 16% or less.
where, "n" and "m" are natural numbers.

3. The metal sheet having an insulating film according to claim 1 or 2, wherein the metal sheet is one type selected from stainless steel foil, titanium foil, and aluminum foil.
